# EUROPÄISCHE PATENTANMELDUNG

(11) **EP 4 617 726 A1**
(43) Veröffentlichungstag der Anmeldung: **17.09.2025**
(21) Anmeldenummer: 25159905.6
(22) Anmeldetag: 25.02.2025
(51) Int. Cl.: G01S 13/88, G01S 13/89, G01S 7/24, G01S 7/41, G01S 13/86

(54) **MESSGERÄT**

(30) Priorität: 11.03.2024 DE 102024202230
(71) Anmelder: Robert Bosch GmbH, 70442 Stuttgart (DE)
(72) Erfinder: Troeltzsch, Uwe, 51503 Roesrath (DE); Steuler, Jan Linus, 61200 Woelfersheim (DE); Koelsch, Andreas, 86971 Peiting (DE); Sgarz, Heiko, 71229 Leonberg (DE); Giliard, Anke, 70180 Stuttgart (DE); Frischen, Andreas, 71229 Leonberg (DE); Fiederer, Lukas, 72336 Balingen (DE); Moster, Benjamin, 75223 Niefern-Oeschelbronn (DE)

(57) **Zusammenfassung**

Die Erfindung betrifft ein Messgerät (100), insbesondere ein Diagnosegerät für Wände, umfassend wenigstens eine Radarsensoreinheit (101) zum Bereitstellen von Radardaten (103) einer zu diagnostizierenden Wand (105), ein Diagnosemodul (107) zum Ausführen einer Wanddiagnose basierend auf den Radardaten (103) und zum Erstellen von Diagnoseergebnissen (109) und eine Anzeigeeinheit (111) zum Anzeigen der Diagnoseergebnisse (109) einem Nutzer des Messgeräts (100), wobei das Diagnosemodul (107) eingerichtet ist, basierend auf den Radardaten (103) ein in der Wand (105) ausgebildetes Objekt (113) zu erkennen, wobei die die Objekterkennung eine Bestimmung einer Objektposition (115) und eine Klassifizierung eines Objekttyps (117) des Objekts (113) umfasst.

## Beschreibung

Die vorliegende Erfindung betrifft ein Messgerät, insbesondere ein Wanddiagnosegerät.

### Stand der Technik

Aus dem Stand der Technik sind Wanddiagnosegeräte zum Diagnostizieren von Wänden und zum Detektieren von in den Wänden ausgebildeten Objekten bekannt.

Es ist eine Aufgabe der vorliegenden Erfindung, ein verbessertes Messgerät, insbesondere ein Wanddiagnosegerät, bereitzustellen.

Die Aufgabe wird durch das Messgerät des Anspruchs 1 gelöst. Vorteilhafte Ausführungsformen sind Gegenstand der abhängigen Ansprüche.

Nach einem Aspekt wird ein Messgerät bereitgestellt, insbesondere ein Diagnosegerät für Wände, umfassend wenigstens eine Radarsensoreinheit zum Bereitstellen von Radardaten einer zu diagnostizierenden Wand, ein Diagnosemodul zum Ausführen einer Wanddiagnose basierend auf den Radardaten und zum Erstellen von Diagnoseergebnissen und eine Anzeigeeinheit zum Anzeigen der Diagnoseergebnisse einem Nutzer des Messgeräts, wobei das Diagnosemodul eingerichtet ist, basierend auf den Radardaten ein in der Wand ausgebildetes Objekt zu erkennen, wobei die die Objekterkennung eine Bestimmung einer Objektposition und eine Klassifizierung eines Objekttyps des Objekts umfasst.

Hierdurch kann der technische Vorteil erreicht werden, dass ein verbessertes Messgerät, insbesondere ein Diagnosegerät für Wände, bereitgestellt werden kann. Das Messgerät ist vorzugsweise als ein Wanddiagnosegerät ausgebildet, mittels dem zu untersuchenden Wänden untersucht werden können. Insbesondere ist das Wanddiagnosegerät eingerichtet, in der Wand angeordnete Objekte zu erkennen. Hierzu umfasst das Messgerät wenigstens eine Radarsensoreinheit, mittels der Radarsignale in Richtung einer zu untersuchenden Wand ausgesendet und vorn der Wand reflektierte Radarsignale empfangen werden können. Ferner umfasst das Messgerät ein Diagnosemodul, das eingerichtet ist, auf die Radardaten der Radarsensoreinheit ausgeführt und hierauf basierend eine Wanddiagnose auszuführen.

Das Diagnosemodul ist hierzu eingerichtet, basierend auf den Radardaten der Radarsensoreinheit, eine Objekterkennung von in der zu untersuchenden Wand angeordneten Objekten auszuführen. Die Objekterkennung umfasst hierbei wenigstens eine Objektdetektion und eine Objektklassifikation.

Die Objektdetektion umfasst zum einen das Detektieren eines in der Wand angeordneten Objekts und das bestimmen einer Objektposition des Objekts innerhalb der Wand. Die Objektklassifikation umfasst das Bestimmen von Objektklassen, denen das detektierte Objekt zuzuordnen ist. Mittels der Objektklassifikation können Objekttypen des detektierten Objekts eindeutig bestimmt werden. Ferner umfasst das Messgerät eine Anzeigeeinheit. Auf der Anzeigeeinheit, die beispielsweise als ein Display ausgebildet sein kann, können die Diagnoseergebnisse der Wanddiagnose, sprich eine Objektposition und/oder ein Objekttyp des detektierten und klassifizierten und in der Wand angeordneten Objekt einem Nutzer angezeigt werden.

Das erfindungsgemäße Messgerät umfasst hierbei den Vorteil, dass eine eindeutige Klassifikation der detektierten Objekte, sprich eine eindeutige Zuordnung von Objekttypen der detektierten Objekte, ausschließlich basierend auf Radardaten einer Radarsensoreinheit des Messgeräts durchgeführt werden kann. Zusätzliche Informationen, beispielsweise Messwerte zusätzlicher Messgrößen zusätzlicher Sensorelemente, sind für die Objekterkennung im Sinne der vorliegenden Erfindung nicht notwendig.

Nach einer Ausführungsform ist das Diagnosemodul ferner eingerichtet, basierend auf den Radardaten eine Objekttiefe des Objekts innerhalb der Wand zu bestimmen, wobei die Objekttiefe durch einen Abstand des in der Wand ausgebildeten Objekts zu einer Oberfläche der Wand definiert ist.

Hierdurch kann der technische Vorteil erreicht werden, dass durch das Messgerät basierend auf den Radardaten der Radarsensoreinheit neben der Objekterkennung eine Objekttiefe des Objekts innerhalb der Wand bestimmbar ist. Die Objekttiefe beschreibt hierbei einen Abstand des Objekts zu einer Oberfläche der Wand. Durch das entsprechend eingerichtete Diagnosemodul kann die Objekttiefe ausschließlich basierend auf den Radardaten der Radarsensoreinheit ermittelt werden.

Nach einer Ausführungsform ist das Diagnosemodul ferner eingerichtet, basierend auf den Radardaten eine Objektausdehnung des Objekts in einer vordefinierten Richtung zu bestimmen.

Hierdurch kann der technische Vorteil erreicht werden, dass basierend auf den Radardaten der Radarsensoreinheit ferner eine Objektausdehnung des in der Wand befindlich detektierten Objekts ermöglicht ist. Die Objektausdehnung beschreibt hierbei eine Ausdehnung des Objekts wenigstens in Bezug auf eine Raumrichtung, bevorzugt in Bezug auf zwei Raumrichtungen, besonders bevorzugt in Bezug auf drei Raumrichtungen. Dies ermöglicht eine eindimensionale, bevorzugt zweidimensionale, besonders bevorzugt dreidimensionale Ausdehnungsinformation des in der Wand befindlichen Objekts.

Nach einer Ausführungsform ist das Diagnosemodul ferner eingerichtet, basierend auf den Radardaten einen Wandtyp der Wand zu klassifizieren.

Hierdurch kann der technische Vorteil erreicht werden, dass neben der Objekterkennung ferner eine Wandtypenklassifikation ausschließlich basierend auf den Radardaten der Radarsensoreinheit durchgeführt werden kann. In der Wandtypenklassifikation können verschiedene Wandtypen der zu untersuchenden Wände durch das entsprechend eingerichtete Diagnosemodul bestimmt bzw. klassifiziert werden. Durch die automatische Wandtypenklassifizierung muss der Nutzer nicht extra den jeweiligen Wandtyp der zu untersuchenden Wand als Zusatzinformation für die Wanddiagnose eingeben, wie dies aus dem Stand der Technik bekannt ist, sondern der Wandtyp wird durch das Diagnosemodul automatisch basierend auf den Radardaten der Radarsensoreinheit ermittelt.

Der Wandtyp kann als Zusatzinformation, beispielsweise für eine Hintergrundkorrektur, in die Wanddiagnose und die Objekterkennung einfließen. Alternativ oder zusätzlich kann der detektierte Wandtyp als Diagnoseergebnis dem Nutzer in der Anzeigeeinheit als zusätzliche Information angezeigt werden.

Nach einer Ausführungsform ist das Diagnosemodul ferner eingerichtet, basierend auf dem klassifizierten Wandtyp eine Untergrundkorrektur für die Objekterkennung auszuführen.

Hierdurch kann der technische Vorteil erreicht werden, dass durch die Berücksichtigung des klassifizierten Wandtyps der zu untersuchenden Wand in einer Untergrundkorrektur der Radardaten der Radarsensoreinheit kann eine präzisere Objekterkennung bewirkt werden. Unterschiedliche Wandtypen sorgen für unterschiedliche von der Wand reflektierte Radarsignale. Bei der Berücksichtigung des jeweiligen Wandtyps in Form einer Untergrundkorrektur können diese Effekte der unterschiedlichen Wandtypen auch die Radarsignale berücksichtigt werden. Dies ermöglicht die Vermeidung von auf Grund des Wandtyps basierenden Verfälschungen der Objekterkennung und ermöglicht eine präzisere Erkennung der in der Wand angeordneten Objekte.

Nach einer Ausführungsform ist die Anzeigeeinheit eingerichtet, dem Nutzer die Objektposition des Objekts in der Wand und eine Typenklasse des Objekttyps des Objekts und/oder eine Objekttiefe und/oder eine Objektausdehnung des Objekts und/oder eine Typenklasse des Wandtyps der Wand als Diagnoseergebnis anzuzeigen.

Hierdurch kann der technische Vorteil erreicht werden, dass dem Nutzer eine Vielzahl verschiedenere Informationen bezüglich der zu untersuchenden Wand in der Anzeige einer des Messgeräts bereitgestellt werden können. Der Nutzer hat somit auf einen Blick die essentiellen Ergebnisse der Wanddiagnose in der Anzeigeeinheit dargestellt und kann hieraus basierend die geplante Bearbeitung der Wand durchführen.

Nach einer Ausführungsform umfasst das Diagnosemodul wenigstens ein Vorverarbeitungsmodul, ein Wandtypklassifizierungsmodul und ein Objekterkennungsmodul, wobei das Vorverarbeitungsmodul eingerichtet ist, die Radardaten der Radarsensoreinheit vorzuverarbeiten und Eingabedaten für das Wandtypklassifizierungsmodul und das Objekterkennungsmodul bereitzustellen, wobei das Wandtypklassifizierungsmodul eingerichtet ist, basierend auf den durch das Vorverarbeitungsmodul bereitgestellten Eingabedaten den Wandtyp der Wand zu klassifizieren, und wobei das Objekterkennungsmodul eingerichtet ist, basierend auf den durch das Vorverarbeitungsmodul bereitgestellten Eingabedaten das in der Wand ausgebildete Objekt zu detektieren und den jeweiligen Objekttyp des Objekts zu klassifizieren.

Hierdurch kann der technische Vorteil erreicht werden, dass eine präzise Wanddiagnose durch das entsprechend ausgebildete Diagnosemodul auf den Radardaten der Radarsensoreinheit ermöglicht ist. Durch die Vorverarbeitung der Radardaten der Radarsensoreinheit können die Radardaten in die für die Wanddiagnose benötigte Form gebracht werden. Durch ein entsprechend ausgebildetes Wandtypklassifizierungsmodul kann auf den vorverarbeiteten Radardaten eine entsprechende Wandtypklassifikation ausgeführt und der jeweilige Wandtyp der Wand bestimmt werden.

Durch ein Objekterkennungsmodul kann basierend auf den vorverarbeiteten Radardaten und unter Berücksichtigung des durch das Wandtypklassifizierungsmodul bereitgestellten Wandtyps eine Objekterkennung eines in der Wand angeordneten Objekts ausgeführt werden. Das Objekterkennungsmodul ist hierbei eingerichtet, basierend auf den vorverarbeiteten Radardaten und unter Berücksichtigung des bereitgestellten Wandtyps eine Objektdetektion und eine Objektklassifikation des in der Wand angeordneten Objekts durchzuführen. Die vorgestellte Architektur des Diagnosemoduls erlaubt eine möglichst präzise und zuverlässige Wanddiagnose von zu untersuchenden Wänden.

Nach einer Ausführungsform umfasst das Diagnosemodul wenigstens ein erstes Vorverarbeitungsmodul und eine zweites Vorverarbeitungsmodul umfasst, wobei das erste Vorverarbeitungsmodul eingerichtet ist, die Radardaten der Radarsensoreinheit vorzuverarbeiten und die Eingabedaten für das Wandtypklassifizierungsmodul bereitzustellen, wobei das Wandtypklassifizierungsmodul eingerichtet ist, basierend auf den durch das erste Vorverarbeitungsmodul bereitgestellten Eingabedaten den Wandtyp der Wand zu klassifizieren und eine Wandtypinformation dem zweiten Vorverarbeitungsmodul bereitzustellen, wobei das zweite Vorverarbeitungsmodul eingerichtet ist, die Radardaten der Radarsensoreinheit vorzuverarbeiten und unter Berücksichtigung der Wandtypinformation des Wandtypklassifizierungsmoduls die Eingabedaten für das Objekterkennungsmodul bereitzustellen, und wobei das Objekterkennungsmodul eingerichtet ist, basierend auf den durch das zweite Vorverarbeitungsmodul bereitgestellten Eingabedaten das in der Wand ausgebildete Objekt zu detektieren und den jeweiligen Objekttyp des Objekts zu klassifizieren.

Hierdurch kann der technische Vorteil erreichet werden, dass durch das erste Vorverarbeitungsmodul und das zweite Vorverarbeitungsmodul eine präzisere Vorverarbeitung der Radardaten der Radarsensoreinheit ermöglich ist. Die vorgestellte Architektur des Diagnosemoduls ermöglicht somit eine weiterpräzisierte Objekterkennung und damit eine weiterpräzisierte Wanddiagnose.

Nach einer Ausführungsform das Messgerät ferner wenigstens einen Induktionssensor und/oder einen Wirbelstromsensor und/oder einen Kapazitätssensor und/oder Wechselstromsensor und/oder ein NMR-Sensor und/oder einen Ultraschallsensor zum Bereitstellen zusätzlicher Sensordaten, wobei das Diagnosemodul eingerichtet ist, die Wanddiagnose unter Berücksichtigung der zusätzlichen Sensordaten auszuführen.

Hierdurch kann der technische Vorteil erreicht werden, dass durch weitere Sensordaten zusätzlicher Sensoren, die jeweils eingerichtet sind, unterschiedliche physikalische Messgrößen zu detektieren, zusätzliche Information zuzüglich zu den Informationen der Radardaten der Radarsensoreinheit in die Wanddiagnose einfließen können. Diese zusätzlichen und zu den Informationen der Radardaten der Radarsensoreinheit vorzugsweise komplementären Information ermöglichen eine weitere Präzisierung der Wanddiagnose bzw. der Objekterkennung.

Nach einer Ausführungsform umfasst das Diagnosemodul wenigstens eine entsprechend trainierte künstliche Intelligenz, die eingerichtet ist, basierend auf den Radardaten und/oder den zusätzlichen Sensordaten eine Objekterkennung und/oder eine Wandklassifikation und/oder eine Objekttiefenbestimmung durchzuführen.

Hierdurch kann der technische Vorteil erreicht werden, dass durch die Ausbildung des Diagnosemoduls als eine entsprechend trainierte künstliche Intelligenz, die darauf trainiert ist, basierend auf den Radardaten, bzw. gegebenenfalls unter Berücksichtigung der Information der zusätzlichen Sensoren, eine Objekterkennung und/oder eine Wandklassifikation und/oder eine Objekttiefenbestimmung und/oder eine Objektausdehnungsbestimmung auszuführen, ein zuverlässiges und leistungsfähiges Diagnosemodul bereitgestellt werden kann. Durch die Verwendung der Technik der künstlichen Intelligenz kann eine präzise Wanddiagnose bereitgestellt werden.

Nach einer Ausführungsform umfasst das Messgerät ferner eine Bewegungserfassungseinheit, wobei die Bewegungserfassungseinheit eingerichtet ist, eine Bewegung des Messgeräts entlang der Oberfläche der Wand zu erfassen.

Hierdurch kann der technische Vorteil erreicht werden, dass durch die Bewegungserfassungseinheit eine Bewegung des Messgeräts relativ zur Wand ermittelt werden kann. In der üblichen Verwendung von Wanddiagnosegeräten wird das Wanddiagnosegerät vom Nutzer entlang der zur diagnostizierenden Wand bewegt. Durch die Bewegungserfassungseinheit kann die entsprechende relative Bewegung des Messgeräts relativ zur Wand ermittelt werden. Basierend auf dieser ermittelten Relativbewegung kann die Wanddiagnose für unterschiedliche Positionen des Messgeräts relativ zur Wand durchgeführt werden. Dies ermöglicht eine flächige Untersuchung der zu untersuchenden Wand und erlaubt das Erkennen von Objekten und die Bestimmung einer Ausdehnung von Objekten über einen Bereich, der substantiell größer ist, als ein Wirkbereich der Radarsensoreinheit.

Durch die Bewegungserfassungseinheit ist somit eine Wanddiagnose während des Bewegens des Messgeräts relativ zur Wand ermöglicht, wodurch ein größerer Bereich der zu untersuchenden Wand abgedeckt werden kann und die Wanddiagnose entsprechend beschleunigt werden kann.

Nach einer Ausführungsform umfassen Objektklassen des detektierten Objekts: Metall-/Nichtmetallobjekt, Kabel für Niederspannung, Kabel mit einphasigem AC-Signal, Kabel mit mehrphasigem AC-Signal, Holzträger, Metallträger, Kunststoffrohr, wassergefülltes Kunststoffrohr, beispielsweise Frischwasserrohr, nicht-wassergefülltes Kunststoffrohr, beispielsweise Abwasserrohr, und/oder wobei die Wandtypklassen der Wand umfassen: Betonwand, Leichtbau-/Trockenbauwand, gemauerte Wand und/oder von vermauerten Steinen der Wand, Fußbodenheizung, Wandheizung.

Hierdurch kann der technische Vorteil erreicht werden, dass eine große Anzahl verschiedener Objekte unterschiedlicher Objekttypen erkannt bzw. klassifiziert werden kann. Das Messgerät bzw. das Diagnosemodul kann hierbei darauf trainiert sein, übliche in Gebäudewänden verbaute Objekte zu detektieren und zu klassifizieren. Dies ermöglicht eine besonders präzise Wanddiagnose, in der die detektierten Objekte präzise und eindeutig den entsprechenden Objektklassen zugeordnet werden können.

Durch die präzise Objektklassifizierung und das Bereitstellen der entsprechenden Klassifizierungsinformation dem Nutzer über die Anzeigeeinheit ist eine möglichst aussagekräftige Wanddiagnose ermöglicht. In dem der Nutzer nicht nur weiß, dass und wo sich ein Objekt innerhalb der Wand befindet, sondern auch um welchen Objekttyp es sich bei dem detektierten Objekt handelt, kann der Nutzer entsprechend entscheiden, wie die weitere Bearbeitung der Wand in Bezug auf das detektierte Objekt auszuführen ist. Das Bereitstellen der Objekttypen der Objektklassifikation der detektierten Objekte stellt somit einen essentiellen Bereich der Wanddiagnose dar, da der Nutzer basierend auf dem angegebenen Objekttyp die geplante Bearbeitung der Wand entsprechend anpassen kann.

Ausführungsformen der Erfindung sind mit Bezug auf die folgenden Figuren beschrieben. Die Figuren zeigen:
- Fig. 1: eine schematische Darstellung eines Messgeräts gemäß einer Ausführungsform;
- Fig. 2: eine weitere schematische Darstellung des Messgeräts gemäß einer weiteren Ausführungsform;
- Fig. 3: eine weitere schematische Darstellung des Messgeräts gemäß einer weiteren Ausführungsform;
- Fig. 4: eine schematische Darstellung einer Messung des Messgeräts gemäß einer Ausführungsform, und
- Fig. 5: eine weitere schematische Darstellung des Messgeräts gemäß einer weiteren Ausführungsform.

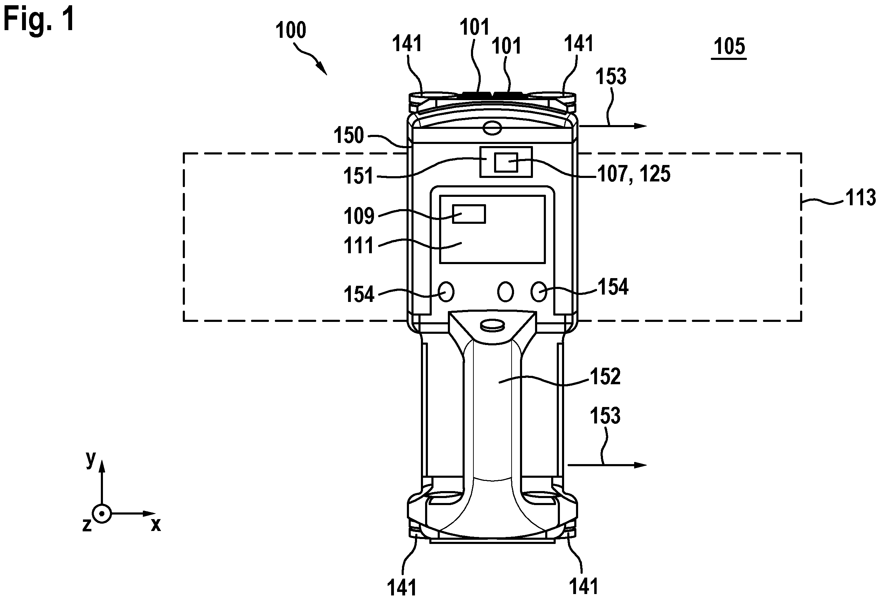

Fig. 1 zeigt eine schematische Darstellung eines Messgeräts 100 gemäß einer Ausführungsform.

Die vorliegende Erfindung betrifft ein Messgerät, insbesondere ein Wanddiagnosegerät für Untersuchungen von zu bearbeitenden Wänden 105. Im Stand der Technik sind Wanddiagnosegeräte bekannt, die dazu verwendet werden, in Wänden angeordnete Objekte zu detektieren. Derartige Geräte erlauben es einem Nutzer zu bearbeitende Wände nach in den Wänden angeordnete Objekte zu untersuchen, um hierauf basierend die geplanten Arbeiten, beispielsweise das Bohren in Wände, derart ausführen zu können, dass Beschädigungen der in den Wänden angeordnete Objekte vermieden werden können.

In der gezeigten Ausführungsform umfasst das Messgerät 100 ein Gehäuse 150 mit einem Griff 152 zum Greifen des Messgeräts 100 durch einen Nutzer, einer Anzeigeeinheit 111 zum Anzeigen von Diagnoseergebnissen 109 der Wanddiagnose und Bedienelemente 154 zum Schalten des Messgeräts 100 in verschiedene Betriebsmodi ausgebildet.

Erfindungsgemäß umfasst das Messgerät 100 wenigstens eine Radarsensoreinheit 101. Mittels der Radarsensoreinheit 101 können Radarsignal in Richtung der zu untersuchenden Wand 105 ausgesendet und von der Wand 105 reflektierte Radarsignale empfangen werden.

Die Radarsensoreinheit 101 kann beispielsweise als ein schmalbandiges Radardetektorgerät im Frequenzbereich 2,4 GHz bis 2,4835 GHz oder als ein ultrabreitbandiges Radardetektorgerät im Frequenzbereich 1,8 GHz bis 5, 8 GHz ausgebildet sein.

Das Messgerät 100 umfasst zur Ausführung der Wanddiagnose ferner ein Diagnosemodul 107, das auf einer Recheneinheit 151 des Messgeräts 100 ausführbar ist. Das Diagnosemodul 107 ist eingerichtet, basierend auf den Radardaten 103 der Radarsensoreinheit 101 eine entsprechende Diagnose der zu untersuchenden Wand auszuführen. Die Radardaten 103 der Radarsensoreinheit 101 bilden hierbei die zu untersuchende Wand 105 und gegebenenfalls innerhalb der Wand 105 angeordnete Objekte 113 ab.

Die durch das Diagnosemodul 107 ausgeführte Wanddiagnose umfasst hierbei wenigstens das Ausführen einer Objekterkennung. Die Objekterkennung umfasst hierbei eine Objektdetektion und eine Objektklassifikation des in der Wand 105 angeordneten Objekts 113. Die Objektdetektion umfasst hierbei wenigstens die Bestimmung einer Objektposition 115. Die Objektposition beschreibt hierbei die Positionierung des in der Wand 105 angeordneten Objekts in Bezug auf ein durch das Messgerät 100 festgelegtes Bezugssystem. Die Objektklassifikation des detektierten Objekts 113 umfasst wenigstens die Bestimmung eines Objekttyps 117 des detektierten Objekts 113.

Die derart bestimmten Diagnoseergebnisse der Wanddiagnose, sprich wenigstens die bestimmte Objektposition 115 und/oder der bestimmte Objekttyp 117 des in der Wand 105 angeordneten Objekts 113, werden darauffolgend in einer Anzeigeeinheit 111 des Messgeräts 100 einem Nutzer des Messgeräts 100 dargestellt. Die Anzeigeeinheit 111 kann beispielsweise als ein entsprechendes Display ausgebildet sein und die Diagnoseergebnisse 109 können visuell angezeigt werden. Zusätzlich kann die Anzeige der Diagnoseergebnisse 109 über akustische und/oder haptische Signale unterstützt werden. Die haptischen Signale können beispielsweise über entsprechende Vibrationssignale realisiert sein.

Das Objekt 113 kann hierbei beispielsweise durch ein entsprechendes Symbol im Display angezeigt werden. Das Objekt 113 kann hierbei in der entsprechenden Objektposition 115 in dem Display angezeigt werden. Die Objektausdehnung 121 kann durch eine entsprechende Größe des angezeigten Symbols visualisiert sein. Der jeweilige Objekttyp 117 des Objekts 113 kann mit einem entsprechenden Begriff oder einer farblichen Unterlegung des Symbols oder durch eine spezielle Form des das Objekt 113 repräsentierenden Symbols visualisiert werden.

Alternativ kann die Wanddiagnose zusätzlich die Bestimmung eines Wandtyps 123 in Form einer Wandtypenklassifikation der zu untersuchenden Wand 105 umfassen. Der Wandtyp 123 beschreibt hierbei den jeweiligen Typ der zu untersuchenden Wand 105. Der Wandtyp kann beispielsweise entsprechenden Wandtypklassen zugeordnet werden, die umfassen können: Betonwand, Leichtbau- /Trockenbauwand, gemauerte Wand und/oder von vermauerten Steinen der Wand, Fußbodenheizung, Wandheizung oder ähnlichen Gebäuden vorzufinden Wandtypen.

Gemäß einer Ausführungsform ist das Diagnosemodul 107 ferner eingerichtet, basierend auf den Radardaten 103 einer Objekttiefe 119 des Objekts 113 innerhalb der Wand 105 zu bestimmen. Die Objekttiefe 119 ist hierbei durch einen Abstand des in der Wand 105 ausgebildeten Objekts zu einer Oberfläche der Wand 105 definiert. Der Abstand kann auf der Objektseite beispielsweise in Bezug auf eine Objektoberfläche oder in Bezug auf einen Objektmittelpunkt definiert sein. Der Abstand zur Oberfläche der Wand 105 beschreibt hierbei einen kürzesten Abstand, der durch einen zur Oberfläche der Wand 105 senkrecht Richtung definiert ist.

Gemäß einer Ausführungsform ist das Diagnosemodul 107 ferner eingerichtet, basierend auf den Radardaten 103 eine Objektausdehnung 121 des Objekts 113 in wenigstens einer vordefinierten Richtung zu bestimmen. Die Objektausdehnung 121 des Objekts 113 beschreibt hierbei eine räumliche Ausdehnung des Objekts 113 in wenigstens einer Raumrichtung, vorzugsweise in zwei Raumrichtungen, besonders bevorzugt in drei Raumrichtungen. Das Objekt 113 kann hierdurch als ein eindimensionales, zweidimensionales oder dreidimensionales Objekt 113 beschrieben werden.

In der üblichen Verwendung wird das Messgerät 100 an der Wandoberfläche der zu untersuchenden Wand 105 platziert. Über die Radarsensoreinheit 101 werden Radarsignale in Richtung der Wand 105 ausgesendet und von der Wand 105 bzw. den danach angeordneten Objekten 113 reflektierte Radarsignale empfangen. Auf diesen Radardaten 103 der Radarsensoreinheit 101 wird durch das Diagnosemodul 107 die oben beschriebene Wanddiagnose ausgeführt und es werden entsprechende Diagnoseergebnisse 109 ermittelt.

Die Diagnoseergebnisse 109 können beispielsweise die Objektposition 115 und/oder den Objekttyp 117 des in der Wand 105 angeordneten Objekts 113 umfassen. Alternativ oder zusätzlich können die Diagnoseergebnisse 109 den Wandtyp 123 der Wand 105 und/oder die Objekttiefe 119 und/oder die Objektausdehnung 121 des Objekts 113 umfassen.

Die derart ausgestalteten Diagnoseergebnisse 109 können darauffolgend einen Nutzer des Messgeräts 100 in einer Anzeigeeinheit 111 des Messgeräts 100 angezeigt werden. Die Anzeigeeinheit 111 kann beispielsweise als ein entsprechendes Display ausgebildet sein. Die Diagnoseergebnisse 109 können in der Anzeigeeinheit 111 in graphischer Form oder in Textform angezeigt sein.

Gemäß einer Ausführungsform umfasst das Messgerät 100 ferner eine Bewegungserfassungseinheit 141. Mit der Bewegungserfassungseinheit 141 kann eine Bewegung des Messgeräts 100 relativ zur Wand 105 erfasst werden. Die Bewegungserfassungseinheit 141 kann hierzu beispielsweise wenigstens ein Rollenelement aufweisen. Bei Auflage des Rollenelements auf der Wandoberfläche der Wand 105 kann bei Bewegung des Messgeräts 100 entlang einer Bewegungsrichtung 153 durch Abrollen des Rollenelements die Bewegung des Messgeräts 100 relativ zur Wand 105 erfasst werden. Alternativ hierzu kann die Bewegungserfassungseinheit 141 eine andere Ausgestaltung aufweisen, mittels der eine relative Bewegung des Messgeräts 100 relativ zur Wand 105 erfassbar ist.

Durch die Bewegung des Messgeräts 100 relativ zur Wand 105 können Radardaten 103 der Radarsensoreinheit 101 für eine Mehrzahl verschiedener Positionierungen des Messgeräts 100 relativ zur Wand 105 aufgenommen werden. Dies ermöglicht eine Untersuchung der Wand 105 in einem größeren Raumbereich, als dies durch den Wirkbereich der Radarsensoreinheit 101 gegeben ist. Dies ermöglicht das Erfassen von Objekten 113, die eine größere räumliche Ausdehnung aufweisen, als der Wirkbereich der Radarsensoreinheit 101.

Während der Bewegung des Messgeräts 100 entlang der Bewegungseinrichtung 153 können durchgehend Radardaten 103 der Radarsensoreinheit 101 aufgenommen werden. Die Wanddiagnose kann basierend auf diesen Radardaten 103 während des Bewegens des Messgeräts 100 entlang der Bewegungsrichtung 153 durch das Diagnosemodul 107 ausgewertet werden. Dies ermöglicht eine beschleunigte Wanddiagnose, die ihre Positionierung des Messgeräts 100 relativ zur Wand 105 berücksichtigt.

Gemäß seiner Ausführungsform ist das Diagnosemodul 107 als eine entsprechende trainierte künstliche Intelligenz 125 ausgebildet. Die künstliche Intelligenz 125 ist hierbei wenigstens darauf trainiert, basierend auf den Radardaten 103 der Radarsensoreinheit 101 die oben beschriebene Wanddiagnose auszuführen und wenigstens die Objektposition 115 und den Objekttyp 117 eines in der Wand 105 angeordneten Objekts 113 zu bestimmen. Die Objektklassifizierung bzw. das Bestimmen des Objekttyps 117 umfasst hierbei das Zuordnen des detektierten Objekts 113 in vordefinierte Objektklassen.

Die Objektklassen können hierbei umfassen: Metall- /Nichtmetallobjekt Kabel für Niederspannung, Kabel mit einphasigem AC-Signal, Kabel mit mehrphasigen AC-Signa, Holzträger, Metallträger, Kunststoffrohr, wassergefülltes Kunststoffrohr, beispielsweise Frischwasserrohr, nicht wassergefülltes Kunststoffrohr, beispielsweise Abwasserrohr oder andere in Gebäudewänden übliche verbaute Elemente.

Ferner kann die künstliche Intelligenz 125 darauf trainiert sein, wenigstens auf den Radardaten 103 der Radarsensoreinheit 101 den Wandtyp 123 der zu untersuchenden Wand 105 zu bestimmen. Mögliche Wandtypen 123 können hierbei umfassen: Betonwand, Leichtbau- /Trockenbauwand, gemauerte Wand und/oder einzelne Steine der gemauerten Wand, Fußbodenheizung, Wandheizung oder andere übliche in Gebäuden verbaute Wandtypen.

Gemäß einer Ausführungsform kann das Messgerät 100 neben der Radarsensoreinheit 101 weitere zusätzliche Sensoren umfassen, mittels denen zusätzliche physikalische Größen detektierbar sind. Beispielsweise kann das Messgerät 100 einen Induktionssensor und/oder einen Wirbelstromsensor und/oder Kapazitätssensor und/oder einen Wechselstromsensor und/oder einen NMR-Sensor und/oder einen Ultraschallsensor oder andere in Wanddiagnosegeräten üblich verbaute Sensoren umfassen.

Das Diagnosemodul 107, insbesondere die entsprechende trainierte künstliche Intelligenz 125, kann hierbei darauf eingerichtet sein, basierend auf den Radardaten 103 der Radarsensoreinheit 101 und unter Berücksichtigung der zusätzlichen Sensorinformationen der weiteren Sensoren die oben beschrieben Wanddiagnose auszuführen. Die zusätzlichen Informationen der zusätzlichen oben genannten Sensoren können hierzu insbesondere zur Objekterkennung der in den Wänden 105 angeordneten Objekte 113 verwendet werden. Über die zusätzlichen Sensorinformationen kann gegebenenfalls eine verbesserte Detektion der Objekte 113 und gegebenenfalls eine verbesserte Klassifikation der Objekte 113 erreicht werden.

Insbesondere kann beispielsweise das Material der Objekte 113, beispielsweise als metallisches oder nichtmetallisches Material, durch die Verwendung der zusätzlichen Sensorinformation verbessert und klassifiziert werden.

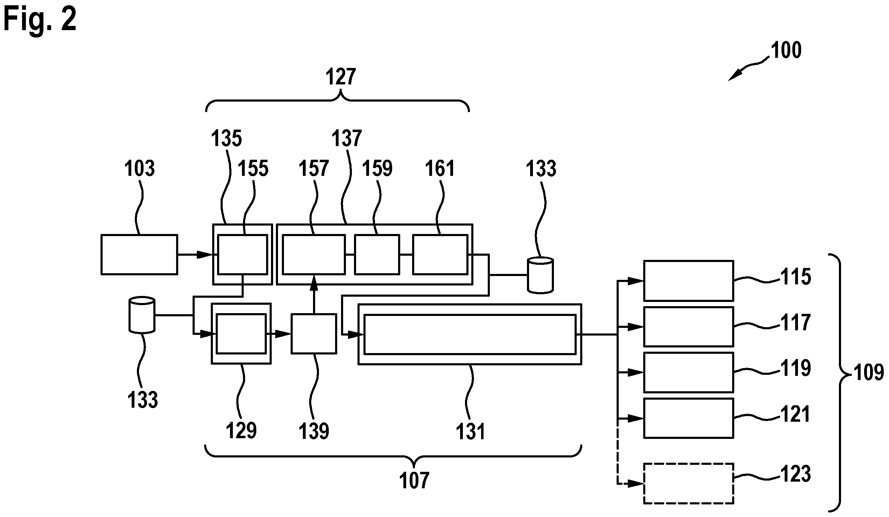

Fig. 2 zeigt eine weitere schematische Darstellung des Messgeräts 100 gemäß einer weiteren Ausführungsform.

In der gezeigten Ausführungsform umfasst das Messgerät 100 neben dem Diagnosemodul 107 ein Vorverarbeitungsmodul 127. Zur Wanddiagnose empfängt das Messgerät 100 zunächst die Radardaten 103 der Radarsensoreinheit 101. Über das Vorverarbeitungsmoduls 127 wird eine Vorverarbeitung der empfangenden Radardaten 103 ausgeführt. Über die Vorverarbeitung des Vorverarbeitungsmoduls 127 können die Radardaten beispielsweise in eine entsprechende für die Wanddiagnose durch das Diagnosemodul 107 benötigte Datenstruktur gebracht werden.

Wie oben beschrieben wird durch das Diagnosemodul 107 während der Wanddiagnose die oben beschriebenen Diagnoseergebnisse 109 erstellt. Die Diagnoseergebnisse 109 können hierbei beispielsweise die Objektposition 115 und/oder den Objekttyp 117 und/oder die Objekttiefe 119 und/oder die Objektausdehnung 121 eines in der zu untersuchenden Wand 105 ausgebildeten Objekts 113 und/oder den Wandtyp 123 der zu untersuchenden Wand 105 umfassen. Die entsprechend generierten Diagnoseergebnisse 109 können darauffolgend in der Anzeigeeinheit 111 des Messgeräts 100 angezeigt werden.

Gemäß einer Ausführungsform können zusätzlich zu den Radardaten 103 der Radarsensoreinheit 101 die oben beschriebenen zusätzlichen Sensorinformationen der zusätzlichen Sensoren in der Wanddiagnose des Diagnosemoduls 107 berücksichtigt werden. Eine entsprechende Vorverarbeitung der zusätzlichen Sensorinformationen durch das Vorverarbeitungsmodul 127 kann entsprechend ausgeführt werden.

In der gezeigten Ausführungsform umfasst das Diagnosemodul 107 ein Wandtypklassifizierungsmodul 129 und ein Objekterkennungsmodul 131. Das Vorverarbeitungsmodul 127 umfasst ein erstes Vorverarbeitungsmodul 135 und ein zweites Vorverarbeitungsmodul 137. Das erste Vorverarbeitungsmodul 135 umfasst eine S-Matrix Reduktion 155. Das zweite Vorverarbeitungsmodul 137 umfasst eine Hintergrundkorrektur 157, eine inverse Fast Fourier Transformation 159 und eine Fokussierung und Migration 161. In der Vorverarbeitung der Radardaten 103 durch das Vorverarbeitungsmodul 127 erfolgt zunächst eine Vorverarbeitung der Radardaten 103 durch das erste Vorverarbeitungsmodul 135 und die darin enthaltene S-Matrix Reduktion 155.

Das ersten Vorverarbeitungsmodul 135 erzeugt hierbei basierend auf den Radardaten 103 Eingabedaten 133. Die Eingabedaten 133 dienen als Eingabedaten für das Wandtypklassifizierungsmodul 129. Das Wandtypklassifizierungsmodul 129 führt hierbei basierend auf den Eingabedaten 133 eine Wandtypenklassifizierung der zu untersuchenden Wand 105 aus und generiert eine Wandtypinformation 139. In der Wandtypinformation 139 ist der in der Wandtypenklassifizierung bestimmte Wandtyp 123 der zu untersuchenden Wand 105 enthalten.

Darauffolgend wird das zweite Vorverarbeitungsmodul 137 basierend auf den Radardaten 103 und der Wandtypinformation 139 eine Vorverarbeitung ausgeführt. Hierbei wird unter Berücksichtigung des in der Wandtypinformation 139 ermittelten Wandtyps 123 eine Hintergrundkorrektur 157 der Radardaten 103 ausgeführt. Je nach Wandtyp 123 der zu untersuchenden Wand 105 können unterschiedliche Effekte auf die Radardaten 103 auftreten.

Durch die Hintergrundkorrektur 157 können diese Effekte, die primär auf dem jeweiligen Wandtyp 123 basieren und eine Objekterkennung beeinflussen können, korrigiert werden. Nach ausgeführter Hintergrundkorrektur kann durch Ausführung der inversen Fast Fourier Transformation 159 bzw. der Fokussierung und Migration 161 eine weitere Vorverarbeitung ausgeführt werden und erneute Eingabedaten 133 für das Objekterkennungsmodul 131 erstellt werden. Basierend auf den durch das zweite Vorverarbeitungsmodul 137 bereit gestellten Eingabedaten 133 führt das Objekterkennungsmodul 133 die Objekterkennung des in der zu untersuchenden Wand 105 angeordneten Objekts 113 aus und bestimmt wenigstens die Objektposition 115 und den Objekttyp 117 des jeweiligen Objekts 113. Zusätzlich kann durch das Objekterkennungsmodul 131 die Objekttiefe 119 und die Objektausdehnung 121 bestimmt werden.

Nach einer Ausführungsform ist das Diagnosemodul ferner eingerichtet, basierend auf den Radardaten eine Objekttiefe des Objekts innerhalb der Wand zu bestimmen, wobei die Objekttiefe durch einen Abstand des in der Wand ausgebildeten Objekts zu einer Oberfläche der Wand definiert ist.

Die Vorverarbeitung ist hierbei optional. In Abhängigkeit des für das Diagnosemodul 107 verwendeten Algorithmus können komplett unverarbeitete Radarechos verschiedener Frequenzen als Radardaten 103 und als Eingabedaten für das Diagnosemodul 107 genutzt werden. Alternativ können über mehrere Schritte verarbeitete Radardaten 103 vorverwendet werden. Die Vorverarbeitungsschritte umfassen hierbei beispielsweise die Transformation der Signale vom Frequenzraum in den Zeit- oder Distanzraum, Hintergrundabzug, Entrauschung und Normalisierung der Signale. Bei Radardaten 103, die in Form von komplexen Zahlen vorliegen, kann ausschließlich der Absolutwert verarbeitet werden. Alternativ oder zusätzlich können die Phaseninformation berücksichtigt werden.

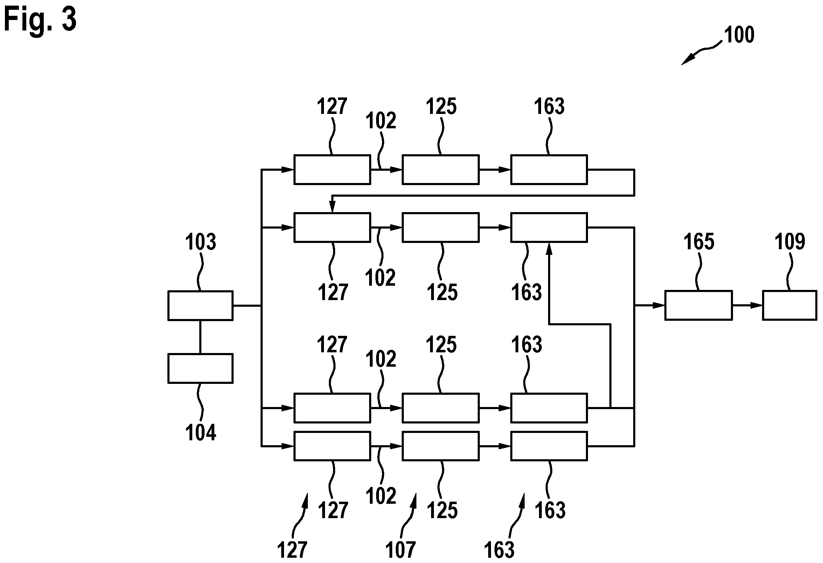

Fig. 3 zeigt eine weitere schematische Darstellung des Messgeräts 100 gemäß einer weiteren Ausführungsform.

In der gezeigten Ausführungsform umfasst das Diagnosemodul 107 eine Mehrzahl von parallel verlaufenden Verarbeitungspfaden 102. In jedem Verarbeitungspfad 102 ist ein Vorverarbeitungsmodul 127, das Diagnosemodul 107, beispielsweise umfassend das Wandtypklassifizierungsmodul 129 und/oder das Objekterkennungsmodul 131 gemäß der Ausführungsform in Fig, 2, und ein Nachverarbeitungsmodul 163.

In Fig. 3 werden primär die Radardaten 103 als Eingabedaten für die Wanddiagnose dargestellt. Zuzüglich zu den gezeigten Radardaten können jedoch auch die Zusatzinformationen der zusätzlichen Sensoren als Eingabedaten für die Wanddiagnose dienen. Hierbei können die unterschiedlichen Informationen der verschiedenen Sensortypen in den verschiedenen parallelen Verarbeitungspfaden 102 verarbeitet werden und die entsprechende Wanddiagnose getrennt auf den unterschiedlichen Sensorinformationen ausgeführt werden. Nach Abschluss der Wanddiagnose kann über ein Zusammenfassungsmodul eine Zusammenfassung der einzelnen Teilanalyseergebnisse zu den Diagnoseergebnissen 109 der Wanddiagnose zusammengefügt werden.

Alternativ oder zusätzlich können durch die verschiedenen Verarbeitungspfade 102 auch basierend auf den gleichen Sensorinformationen unterschiedliche Teilaspekte der Wanddiagnose durchgeführt werden.

Die einzelnen Verarbeitungspfade 102 können hierbei beispielsweise unterschiedliche Radardaten 103 verarbeiten, die während des Bewegens des Messgeräts 100 relativ zur Wand 105 für verschiedene Positionen des Messgeräts 100 relativ zur Wand 105 aufgenommen wurden. Die Radardaten 103, die somit unterschiedliche Bereiche der Wand 105 abbilden und zeitlich nacheinander während des Bewegens des Messgeräts 100 relativ zur Wand 105 aufgenommen wurde, können dann in den verschiedenen Verarbeitungspfaden 102 durch die gezeigten Module verarbeitet werden.

Die verschiedenen Verarbeitungspfade führen hierbei eine eigenständige Wanddiagnose durch, die wenigstens das Bestimmen der Objektposition 115 und/oder des Objekttyps 117 des in der Wand 105 angeordneten Objekts 113 umfassen.

Durch das Zusammenfassungsmodul 165 können die in den einzelnen Verarbeitungspfaden 102 bereitgestellten Teilergebnisse der eigenständigen Wanddiagnosen der unterschiedlichen Bereiche der Wand 105 einem zusammenhängenden Diagnoseergebnis 109 zusammengefasst werden. Das zusammenhängende Diagnoseergebnis beschreibt hierbei die Wanddiagnose eines zusammenhängenden Raumbereichs, der während des Bewegens des Messgeräts 100 relativ zur Wand 105 überstrichen und durch die entsprechenden aufgenommenen Radardaten 103 abgebildet wurde. Die parallele Verarbeitung der Radardaten 103 bzw. der zusätzlichen Sensorinformationen 104 der zusätzlichen Sensorelemente in den verschiedenen Verarbeitungspfaden 102 ermöglicht somit eine beschleunigte Wanddiagnose.

Alternativ hierzu können in den unterschiedlichen Verarbeitungspfaden 102 auch verschiedene Funktionen der Wanddiagnose ausgeführt werden. So kann beispielsweise in einem Verarbeitungspfad 102 die Wandtypenklassifizierung und das Bestimmen des Wandtypen 123 der zu untersuchenden Wand 105 ausgeführt werden. In einem weiteren Verarbeitungspfad 102 kann die Objekterkennung des in der Wand angeordneten Objekts 113 ausgeführt werden. Hierbei können die Objektdetektion mit der Bestimmung der Objektposition 115 und die Objektklassifikation mit der Bestimmung des Objekttypens 113 in einem Verarbeitungspfad 102 ausgeführt werden.

Alternativ hierzu kann dann auch die Objektdetektion und die Objektklassifikation in zwei getrennten Verarbeitungspfaden 102 ausgeführt werden. In weiteren Verarbeitungssträngen 102 können jeweils die Objekttiefenbestimmung, sprich die Bestimmung der Objekttiefe 119, und/oder die Bestimmung der Objektausdehnung 121 bewirkt werden. In dem Zusammenfassungsmodul 165 können die verschiedenen Teilergebnisse der Wanddiagnose in entsprechende Diagnoseergebnisse 109 zusammengefasst werden.

Das Diagnosemodul 107 kann hierbei in unterschiedliche künstliche Intelligenzen 125 aufgeteilt sein, wie dies bereits in der Ausführungsform in Fig. 2 dargestellt ist. Das Diagnosemodul 107 kann hierbei beispielsweise ein Wandtypenklassifizierungsmodul 129 und ein Objekterkennungsmodul 131 umfassen. Das Objekterkennungsmodul kann wiederum in ein Objektdetektionsmodul und ein Objektklassifikationsmodul aufteilt sein. Das Diagnosemodul 107 kann ferner ein Objekttiefenbestimmungsmodul und Objektausdehnungsmodul umfassen, die jeweils eingerichtet sind, die Objekttiefe 119 und die Objektausdehnung 121 zu bestimmen.

Die entsprechenden Module können jeweils als eigenständige künstliche Intelligenzen 125, beispielsweise neuronale Netze, ausgebildet sein. Alternativ können die verschiedenen Module Teile eines gesamten künstlichen neuronalen Netzes bilden, die gemäß aus dem Stand der Technik bekannten Strukturen zu einem gesamten neuronalen Netz verbunden sind.

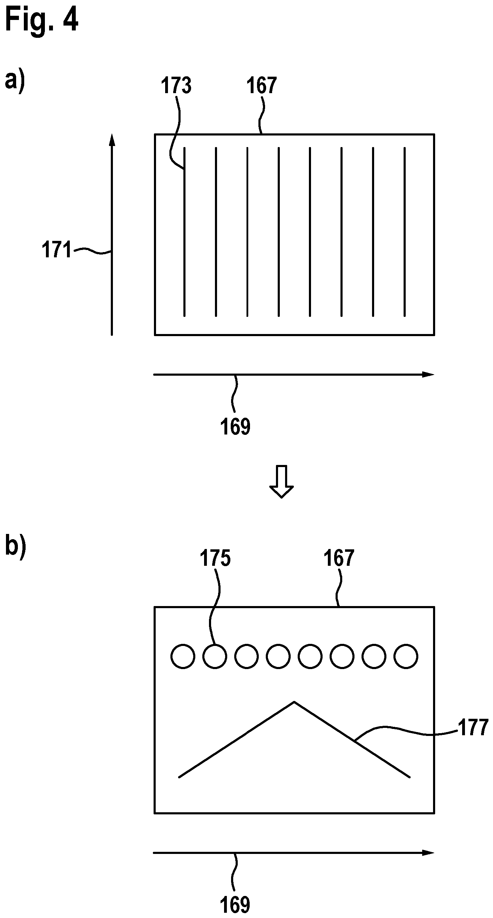

Fig. 4 zeigt eine schematische Darstellung einer Messung des Messgeräts 100 gemäß einer Ausführungsform.

Zur Vorverarbeitung können die Radardaten 103 bzw. die zusätzlichen Sensorinformationen 104 der übrigen Sensoren insbesondere zur numerischen Stabilisierung der nachfolgenden durch das Diagnosemodul 107 während der Wanddiagnose ausgeführten Schritte normalisiert werden. Hierzu können beispielsweise eine Amplitude und/oder Off-set-Kompensation ausgeführt werden. Ferner können zur Reduktion von Störelementen Filterung der Radardaten 103 und zur Reduktion der Datenrate die entsprechenden Sensordaten herabgetastet werden. Ferner können die Radardaten 103 bzw. die zusätzlichen Sensorinformationen 104 in den jeweilig benötigten Frequenzbereich bzw. Zeitbereich transformiert werden. Hierzu können aus dem Stand der Technik bekannte Verfahren angewendet werden.

Ferner können die aufgenommenen Radardaten 103 bzw. zusätzlichen Sensorinformationen 104 in zeitliche oder räumliche Fenster 167 aufgeteilt werden. Zeitliche Fenster 167 können hierbei durch das Aufnehmen der Radardaten 103 bzw. der zusätzlichen Sensorinformationen bzw. der vorverarbeiteten Radardaten 103 über ein festes Zeitintervall generiert werden. Räumliche Fenster 167 können hingegen aus einer Zuordnung der Radardaten 103 bzw. zusätzlichen Sensorinformationen 104 zu Positionen des Messgeräts 100 relativ zur Wand 105 entlang der Bewegungsrichtung 153 generiert werden.

Grafik a) der Fig. 4 zeigt eine derartige aus den oben beschriebenen Schritten ergebende Datenmatrix. Die in Grafik a) gezeigte Datenmatrix des Fensters 167 zeigt eine Mehrzahl von Sensordaten, die beispielsweise Radardaten 103 oder zusätzlichen Sensorinformationen 104 der weiteren Sensoren umfassen können, die entlang einer Frequenzkanalachse 171 bzw. entlang einer Raum-/Zeitachse 169 aufgetragen sind.

Eine Breite der zeitlichen Fenster 167 kann hierbei derart gewählt werden, dass unterschiedliche Abtastraten der Sensoren ausgeglichen werden können und häufig genug ein neues Fenster 167 bereitgestellt werden kann, sodass eine Anzeige der Diagnoseergebnisse 109 der Wanddiagnose in der Anzeigeeinheit 111 ohne eine zu große zeitliche Verzögerung während der durchgeführten Messung oder kurz nach Beendigung der Messung des Messgeräts 100 erfolgen kann.

Hierzu kann eine Rate von 2 bis 20 Fenster pro Sekunde der Datenaufnahme der Sensordaten vorteilhaft sein. Für räumliche Fenster können die räumlichen Abtastraten derart gewählt werden, dass die gewünschte örtliche Genauigkeit erreicht werden kann. Vorteilhaft können hierbei 1 mm bis 1 cm Abtastraten sein. Dies bedeutet, dass alle 1 mm bis 1 cm einer Bewegung des Messgeräts 100 entlang der Bewegungsrichtung 153 entsprechende Sensordaten aufgenommen werden.

Eine Breite der räumlichen Fenster 167 kann derart gewählt werden, dass zusammenhängende Informationen zu einem Objekt 113 in einem Fenster enthalten sind. Vorteilhaft kann hierbei eine Breite von 1 cm bis 20 cm der jeweiligen räumlichen Fenster 167 sein. Hieraus ergeben sich 4 bis 100 Messwerte pro Fenster 167. Dies ermöglicht eine weitere effiziente algorithmische Verarbeitung der entsprechend aufgenommenen Radardaten 103 bzw. zusätzlichen Sensorinformationen durch das Diagnosemodul 107.

Ein weiteres zeitliches Fenster 167 bzw. räumliches Fenster 167 kann hierbei bereitgestellt werden, sobald einer oder mehrere Abtastpunkte zur Verfügung stehen.

Das Diagnosemodul 107 kann derart ausgerichtet sein, dass als Eingabedaten, beispielsweise auch eines jeden Verarbeitungspfad 102 der Ausführungsform in Figur 3, eine der Fenstergröße des jeweiligen räumlichen oder zeitlichen Fensters 167 entsprechende Matrix als Eingabedaten aufzunehmen. Die entsprechenden Eingabedaten können hierbei gemäß der Ausführungsform der Figur 2 die jeweils vorverarbeiteten Sensordaten, sprich Radardaten 103 und zusätzliche Sensorinformationen 104 der zusätzlichen Sensoren, umfassen.

Wie oben ausgeführt, kann die Wanddiagnose durch das Diagnosemodul 107 basierend auf einer entsprechend trainierten künstlichen Intelligenz ausgeführt werden. Alternativ können auch verschiedene Verarbeitungspfade durch Regelbasierte Algorithmen berechnet werden. Auch ist innerhalb eines Verarbeitungspfads 102 eine Kombination aus künstlicher Intelligenz und regelbasiertem Algorithmus in Form einer Parallelschaltung oder Verkettung möglich.

Die Diagnoseergebnisse 109 der Wanddiagnose können als Zahlenwerte, Vektoren oder Matrizen ausgeprägt sein. Ferner kann für die Objektdetektion die Wahrscheinlichkeit einer Detektion, bzw. für die Wandtypenklassifikation bzw. die Objektklassifikation eine Wahrscheinlichkeit der angegebenen Objektklassen bzw. Wandtypenklassen angegeben sein. Gleiches kann für die Positions- und/oder Tiefenbestimmung gelten, für die ebenfalls entsprechende Wahrscheinlichkeitswerte angegeben werden können.

Werden neben den Radardaten 103 die zusätzlichen Sensorinformationen der weiteren Sensortypen in einem Verarbeitungspfad 102 verarbeitet, so können diese entweder innerhalb der künstlichen Intelligenz 125 zusammengeführt oder durch regelbasierte Kombinationen kombiniert werden.

In der Nachverarbeitung jedes Verarbeitungspfads 102, der Ausführungsform in Fig. 3, können mehrere Algorithmusergebnisse, die auf mehreren Fenstern 167 basieren, durch das Zusammenfassungsmodul 165 zusammengefasst werden. Diese Zusammenfassung kann insbesondere durch Mehrheitsbildung, Summenbildung oder auch Multiplikation aufeinanderfolgender Wahrscheinlichkeitswerte realisiert werden.

Ferner kann durch Clustern von mehreren Ergebnissen, beispielsweise von mehreren nahe beieinander liegend detektierten Objekten, erkannt werden, bei welchen Objekten es sich um dasselbe Objekt handelt, sodass diese nicht fälschlicherweise mehrfach erkannt werden.

Ebenso ist es möglich, bei der Zusammenfassung der Ergebnisse aus mehreren Fenstern 167 multiplikativ eine Gewichtungsfunktion 177 anzuwenden. Vorteilhafterweise können hierbei die Diagnoseteilergebnisse 175, die entsprechenden Datenpunkten im Raum entsprechen, mit Bezug auf eine Positionierung der Diagnoseteilergebnisse 175 relativ zu einem Mittelpunkt des jeweiligen Fensters 167 gewichtet werden. Diese ist beispielhaft in der Grafik b) dargestellt, in der die einzelnen Diagnoseteilergebnisse 175 gemäß der gezeigten Gewichtungsfunktion 177 mit Bezug auf den Mittelpunkt des gezeigten Fensters 167 gewichtet sind.

Gemäß einer Ausführungsform können die Ergebnisse eines Verarbeitungspfads 102 nach der Nachverarbeitung 163 auf die Erweiterung eines anderen Verarbeitungspfad 102s Einfluss nehmen. Hierbei können Gewichtungsparameter angepasst werden, die für jedes Fenster von dem jeweiligen Ergebnis aus dem Verarbeitungspfad 102 abhängen können.

Beispielsweise kann das Ergebnis einer Objektklassifikation, in der der Objekttyp 117 eines in der Wand 105 angeordneten Objekts definiert ist, genutzt werden, um das Gewicht einer Wandtypenklassifikation, in der der Wandtyp 123 der jeweiligen Wand 105 bestimmt wird, in der Nachverarbeitung an Stellen ohne Objekte 113 zu erhöhen, da die jeweiligen Radardaten 103 an diesen Stellen weniger durch Reflektionen der Objekte 113 beeinflusst sind.

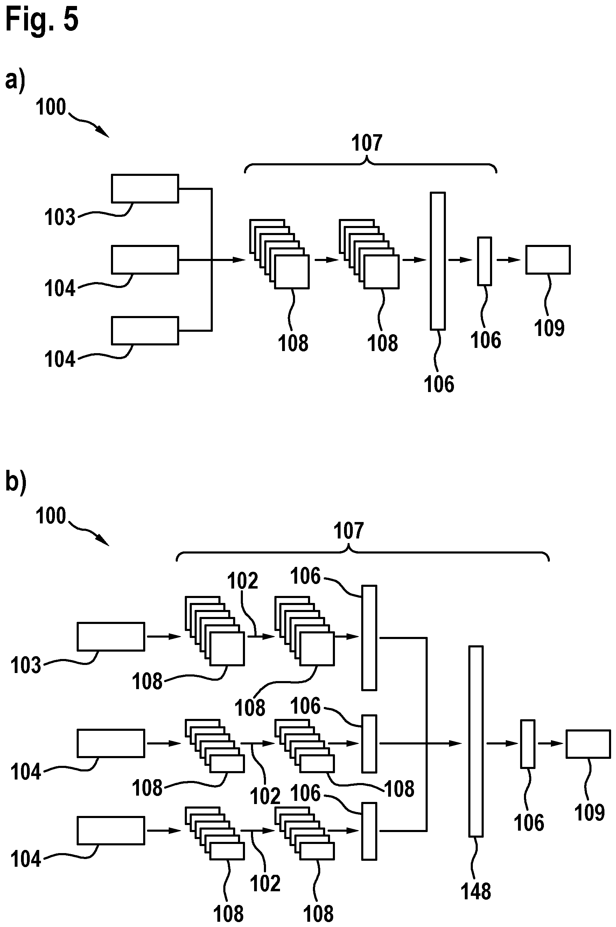

Fig. 5 zeigt eine weitere schematische Darstellung des Messgeräts 100 gemäß einer weiteren Ausführungsform.

Die Grafiken a) und b) der Fig. 5 zeigen zwei verschiedene Alternativen einer gemeinsamen Datenverarbeitung von Radardaten 103 und zusätzlichen Sensorinformationen 104 durch das Diagnosemodul 107.

In Grafik b) wird eine gemeinsame Verarbeitung der Radardaten 103 und der zusätzlichen Sensorinformationen 104 der zusätzlichen Sensoren durch das Diagnosemodul 107 dargestellt. Hierzu werden die Radardaten 103 und die zusätzlichen Sensorinformationen 104 gemeinsam als Eingabedaten des als künstliche Intelligenz, insbesondere als künstliches neuronales Netz, ausgebildet Diagnosemoduls 107 verwendet. Das Diagnosemodul 107 umfasst hier mehrere Faltungsschichten 108 und mehrere dichte Schichten 106. Über die Faltungsschichten 108 und die dichten Schichten 106 werden die Radardaten 103 und die zusätzlichen Sensorinformationen 104 gemeinsam als Eingabedaten verarbeitet. Als Ausgabedaten des Diagnosemoduls 107 werden hierauf basierend die oben bereits erwähnten Diagnoseergebnisse 109 erstellt.

In Grafik b) werden die Radardaten 103 und die zusätzlichen Sensorinformationen 104 hingegen als eigenständige Eingabedaten des Diagnosemoduls 107 verwendet. Das Diagnosemodul 107 wird zu mehrere Verarbeitungspfade 102. Die Verarbeitungspfade 102 umfassen jeweils mehrere Faltungsschichten 108 und wenigstens eine dichte Schicht 106. In den verschiedenen Verarbeitungspfaden 102 wird basierend auf den Radardaten 103 bzw. den zusätzlichen Sensorinformationen 104 getrennt voneinander jeweils eine Wanddiagnose durch das Diagnosemodul 107 erstellt.

In einer zusätzlichen Verkettungsschicht 148 werden die Teilergebnisse der Teildiagnosen der verschiedenen Verarbeitungspfade 102 zusammengefügt und einer letzten dichten Schicht 106 zugeführt. Die Ausgabedaten des Diagnosemoduls 107 entsprechen den oben beschriebenen Diagnoseergebnissen 109.

Das entsprechend ausgebildete Diagnosemodul 107 ist eingerichtet, basierend auf den Radardaten 103 und den zusätzlichen Sensorinformationen 104 eine wie oben beschriebene Wanddiagnose mit den oben beschriebenen Merkmalen auszuführen.

In der gezeigten Ausführungsform ist das Diagnosemodul 107 als ein künstliches neuronales Netz, insbesondere als ein Faltungsnetzwerk, ausgebildet. Entsprechende Netzwerkarchitekturen mit Faltungsschichten 108, dichten Schichten 106 und Verkettungsschichten 148 sind aus dem Stand der Technik bekannt.

## Patentansprüche

1. Messgerät (100), insbesondere ein Diagnosegerät für Wände, umfassend wenigstens eine Radarsensoreinheit (101) zum Bereitstellen von Radardaten (103) einer zu diagnostizierenden Wand (105), ein Diagnosemodul (107) zum Ausführen einer Wanddiagnose basierend auf den Radardaten (103) und zum Erstellen von Diagnoseergebnissen (109) und eine Anzeigeeinheit (111) zum Anzeigen der Diagnoseergebnisse (109) einem Nutzer des Messgeräts (100), wobei das Diagnosemodul (107) eingerichtet ist, basierend auf den Radardaten (103) ein in der Wand (105) ausgebildetes Objekt (113) zu erkennen, wobei die die Objekterkennung eine Bestimmung einer Objektposition (115) und eine Klassifizierung eines Objekttyps (117) des Objekts (113) umfasst.

2. Messgerät (100) nach Anspruch 1, wobei das Diagnosemodul (107) ferner eingerichtet ist, basierend auf den Radardaten (103) eine Objekttiefe (119) des Objekts (113) innerhalb der Wand (105) zu bestimmen, wobei die Objekttiefe (119) durch einen Abstand des in der Wand (105) ausgebildeten Objekts (113) zu einer Oberfläche der Wand (105) definiert ist.

3. Messgerät (100) nach einem der voranstehenden Ansprüche, wobei das Diagnosemodul (107) ferner eingerichtet ist, basierend auf den Radardaten (103) eine Objektausdehnung (121) des Objekts (113) in einer vordefinierten Richtung zu bestimmen.

4. Messgerät (100) nach einem der voranstehenden Ansprüche, wobei das Diagnosemodul (107) ferner eingerichtet ist, basierend auf den Radardaten (103) einen Wandtyp (123) der Wand (105) zu klassifizieren.

5. Messgerät (100) nach einem der voranstehenden Ansprüche, wobei das Diagnosemodul (107) ferner eingerichtet ist, basierend auf dem klassifizierten Wandtyp (123) eine Untergrundkorrektur für die Objekterkennung auszuführen.

6. Messgerät (100) nach einem der voranstehenden Ansprüche, wobei die Anzeigeeinheit (111) eingerichtet ist, dem Nutzer die Objektposition (115) des Objekts (113) in der Wand (105) und eine Typenklasse des Objekttyps (117) des Objekts (113) und/oder eine Objekttiefe (119) und/oder eine Objektausdehnung (121) des Objekts (113) und/oder eine Typenklasse des Wandtyps (123) der Wand (105) als Diagnoseergebnis (109) anzuzeigen.

7. Messgerät (100) nach einem der voranstehenden Ansprüche, wobei das Diagnosemodul (107) wenigstens ein Vorverarbeitungsmodul (127), ein Wandtypklassifizierungsmodul (129) und ein Objekterkennungsmodul (131) umfasst, wobei das Vorverarbeitungsmodul (127) eingerichtet ist, die Radardaten (103) der Radarsensoreinheit (101) vorzuverarbeiten und Eingabedaten (133) für das Wandtypklassifizierungsmodul (129) und das Objekterkennungsmodul (131) bereitzustellen, wobei das Wandtypklassifizierungsmodul (129) eingerichtet ist, basierend auf den durch das Vorverarbeitungsmodul (127) bereitgestellten Eingabedaten (133) den Wandtyp (123) der Wand (105) zu klassifizieren, und wobei das Objekterkennungsmodul (131) eingerichtet ist, basierend auf den durch das Vorverarbeitungsmodul (127) bereitgestellten Eingabedaten (133) das in der Wand (105) ausgebildete Objekt (113) zu detektieren und den jeweiligen Objekttyp (117) des Objekts (113) zu klassifizieren.

8. Messgerät (100) nach Anspruch 7, wobei das Diagnosemodul (107) wenigstens ein erstes Vorverarbeitungsmodul (135) und eine zweites Vorverarbeitungsmodul (137) umfasst, wobei das erste Vorverarbeitungsmodul (135) eingerichtet ist, die Radardaten (103) der Radarsensoreinheit (101) vorzuverarbeiten und die Eingabedaten (133) für das Wandtypklassifizierungsmodul (129) bereitzustellen, wobei das Wandtypklassifizierungsmodul (129) eingerichtet ist, basierend auf den durch das erste Vorverarbeitungsmodul (135) bereitgestellten Eingabedaten (133) den Wandtyp (123) der Wand (105) zu klassifizieren und eine Wandtypinformation (139) dem zweiten Vorverarbeitungsmodul (137) bereitzustellen, wobei das zweite Vorverarbeitungsmodul (137) eingerichtet ist, die Radardaten (103) der Radarsensoreinheit (101) vorzuverarbeiten und unter Berücksichtigung der Wandtypinformation (139) des Wandtypklassifizierungsmoduls (129) die Eingabedaten (133) für das Objekterkennungsmodul (131) bereitzustellen, und wobei das Objekterkennungsmodul (131) eingerichtet ist, basierend auf den durch das zweite Vorverarbeitungsmodul (137) bereitgestellten Eingabedaten (133) das in der Wand (105) ausgebildete Objekt (113) zu detektieren und den jeweiligen Objekttyp (117) des Objekts (113) zu klassifizieren.

9. Messgerät (100) nach einem der voranstehenden Ansprüche, wobei das Messgerät (100) ferner wenigstens einen Induktionssensor und/oder einen Wirbelstromsensor und/oder einen Kapazitätssensor und/oder Wechselstromsensor und/oder ein NMR-Sensor und/oder einen Ultraschallsensor zum Bereitstellen zusätzlicher Sensordaten umfasst, und wobei das Diagnosemodul (107) eingerichtet ist, die Wanddiagnose unter Berücksichtigung der zusätzlichen Sensordaten auszuführen.

10. Messgerät (100) nach einem der voranstehenden Ansprüche, wobei das Diagnosemodul (107) wenigstens eine entsprechend trainierte künstliche Intelligenz (125) umfasst, die eingerichtet ist, basierend auf den Radardaten (103) und/oder den zusätzlichen Sensordaten eine Objekterkennung und/oder eine Wandklassifikation und/oder eine Objekttiefenbestimmung durchzuführen.

11. Messgerät (100) nach einem der voranstehenden Ansprüche, wobei das Messgerät (100) ferner eine Bewegungserfassungseinheit (141) umfasst, und wobei die Bewegungserfassungseinheit (141) eingerichtet ist, eine Bewegung des Messgeräts (100) entlang der Oberfläche der Wand (105) zu erfassen.

12. Messgerät (100) nach einem der voranstehenden Ansprüche, wobei Objektklassen des detektierten Objekts (113) umfassen: Metall-/Nichtmetallobjekt, Kabel für Niederspannung, Kabel mit einphasigem AC-Signal, Kabel mit mehrphasigem AC-Signal, Holzträger, Metallträger, Kunststoffrohr, wassergefülltes Kunststoffrohr, beispielsweise Frischwasserrohr, nicht-wassergefülltes Kunststoffrohr, beispielsweise Abwasserrohr, und/oder wobei die Wandtypklassen der Wand (105) umfassen: Betonwand, Leichtbau-/Trockenbauwand, gemauerte Wand und/oder von vermauerten Steinen der Wand, Fußbodenheizung, Wandheizung.
